# EUROPÄISCHE PATENTSCHRIFT

(11) **EP 4 399 408 B1**
(45) Veröffentlichungstag und Bekanntmachung des Hinweises auf die Patenterteilung: **09.07.2025**
(21) Anmeldenummer: 22769565.7
(22) Anmeldetag: 09.08.2022
(51) Int. Cl.: F03D 15/00, F03D 80/70, F16F 15/08

(54) **FEDERND GELAGERTES GETRIEBEGEHÄUSE**
SPRING-MOUNTED GEAR MECHANISM HOUSING
BOÎTIER DE MÉCANISME D'ENGRENAGE MONTÉ SUR RESSORT

(30) Priorität: 10.09.2021 DE 102021210007
(43) Veröffentlichungstag der Anmeldung: 17.07.2024
(73) Patentinhaber: ZF Friedrichshafen AG, 88046 Friedrichshafen (DE); ZF Wind Power Antwerpen NV, 3920 Lommel (BE)
(72) Erfinder: SMOOK, Warren, 3040 Huldenberg (BE)
(74) Vertreter: ZF Friedrichshafen AG
(86) Internationale Anmeldenummer: PCT/EP2022/072310
(87) Internationale Veröffentlichungsnummer: WO 2023/036536

(56) Entgegenhaltungen:
- EP-A1- 0 525 435
- EP-A1- 2 434 154
- EP-A2- 1 065 374
- DE-A1- 102005 012 751
- DE-A1- 102010 009 863
- DE-A1- 102015 211 794
- DE-A1- 102018 004 763

## Beschreibung

Die Erfindung betrifft eine Antriebsanordnung nach dem Oberbegriff von Anspruch 1. Aus dem Stand der Technik sind Antriebsanordnungen für Windkraftanlagen mit federnd gelagerten Drehmomentstützen bekannt. Bei einer Dreipunktlagerung ist eine Hauptwelle in einer ersten Lagerstelle starr in einer Gondel der Windkraftanlage gelagert. In einer zweiten Lagerstelle ist die Hauptwelle in einem Gehäuse gelagert. Das Gehäuse wiederum weist Drehmomentstützen auf, die über Federelemente mit der Gondel verbunden sind.

CN 202 065 132 U offenbart einen Antriebsstrang für eine Windkraftanlage mit einer Hauptwelle, die vollständig in einem Gehäuse gelagert ist. Das Gehäuse bildet einen Flansch aus. Der Flansch dient der Fixierung des Antriebsstrangs in einem entsprechenden Flansch der Gondel. Der Flansch des Gehäuses und der Flansch der Gondel sind dabei starr miteinander verschraubt.

Die DE 10 2010 009863 A1 offenbart eine Antriebsanordnung nach dem Oberbegriff des Anspruchs 1.

Der Erfindung liegt die Aufgabe zugrunde, die Lagerung des Antriebsstrangs für eine Windkraftanlage in einer gondelfesten Stützstruktur zu verbessern. Diese Aufgabe wird gelöst durch eine Antriebsanordnung nach Anspruch 1. Bevorzugte Weiterbildungen sind in den Unteransprüchen enthalten und ergeben sich aus nachfolgender Beschreibung.

Die erfindungsgemäße Antriebsanordnung umfasst eine Hauptwelle, ein Gehäuse und eine gondelfeste Stützstruktur. Eine Hauptwelle ist eine Eingangswelle eines Getriebes der Windkraftanlage. Im eingebauten Zustand ist sie drehfest mit einem vom Wind angetriebenen Rotor der Windkraftanlage verbunden.

Bei dem Gehäuse handelt es sich vorzugsweise um ein Getriebegehäuse, d.h. um ein Gehäuse des genannten Getriebes, oder um ein Gehäuse, welches mindestens das Getriebegehäuse umfasst.

Die gondelfeste Stützstruktur ist eine Stützstruktur, die bezüglich einer Gondel der Windkraftanlage starr, das heißt ohne die Möglichkeit einer Relativbewegung fixiert ist oder fixierbar ausgestaltet ist. Insbesondere kann die Gondel selbst die Stützstruktur bilden.

Die Hauptwelle ist vollständig in dem Gehäuse gelagert. Dies bedeutet, dass die Hauptwelle mit jedem ihrer Lager in dem Gehäuse gelagert ist. Die Hauptwelle weist also kein Lager auf, mit dem sie nicht in dem Gehäuse gelagert ist.

Jedes Lager der Hauptwelle weist zwei Lagerringe auf. Ein erster der zwei Lagerringe ist auf der Hauptwelle fixiert oder wird einstückig durch die Hauptwelle ausgebildet. Entsprechend ist ein zweiter der beiden Lagerringe in dem Gehäuse fixiert oder wird einstückig durch das Gehäuse ausgebildet.

Das Gehäuse ist erfindungsgemäß mindestens teilweise federn in der Stützstruktur gelagert. Dies bedeutet, dass mindestens eine Lagerstelle, in der das Gehäuse in der Stützstruktur gelagert ist, federnd ausgeführt ist. Eine federnd ausgebildete Lagerstelle erlaubt Relativbewegungen zwischen dem Gehäuse. Die Lagerstelle weist ein oder mehrere Federelemente auf, deren Federkräfte diesen Relativbewegungen entgegenwirken.

Die Erfindung ermöglicht es, nicht nur das Gehäuse und einen Teil der Hauptwelle, sondern den gesamten Antriebsstrang der Windkraftanlage federnd zu lagern. Der Antriebsstrang lässt sich dabei als Einheit von ungefedert miteinander verbundenen Komponenten realisieren. Entfallen Federbewegungen zwischen einzelnen Komponenten des Antriebsstrangs, reduzieren sich die auf die Komponenten einwirkenden Belastungen und infolgedessen der Verschließ.

In einer bevorzugten Weiterbildung ist das Gehäuse vollständig federn in der Stützstruktur gelagert. Dies bedeutet, dass jede Lagerstelle des Gehäuses federnd ausgebildet ist und die oben beschriebenen ein oder mehreren Federelemente aufweist. Keine Lagerstelle ist nichtfedernd ausgebildet. Eine nicht federnd ausgebildete Lagerstelle weist kein Federelement auf.

Durch die vollständig federnde Lagerung des Gehäuses lassen sich der Antriebsstrang der Windkraftanlage und die Stützstruktur mechanisch entkoppeln. Die Übertragung von Schwingungen aus dem Antriebsstrang in die Stützstruktur oder in umgekehrter Richtung aus der Stützstruktur in den Antriebsstrang lässt sich weiterbildungsgemäß nahezu vollständig unterbinden.

In einer alternativ bevorzugten Weiterbildung ist das Gehäuse teilweise federnd und teilweise starr in der Stützstruktur gelagert. Dies bedeutet, dass mindestens eine Lagerstelle federnd und mindestens eine Lagerstelle nicht federnd ausgebildet ist. Vorzugsweise sind genau zwei Lagerstellen, etwa die getriebeseitigen Lagerstellen, nicht federnd und genau zwei Lagerstellen, etwa die generatorseitigen Lagerstellen, federnd ausgebildet.

Bevorzugt ist die Antriebsanordnung mit mindestens zwei Hauptlagern weitergebildet. Ein Hauptlager bezeichnet ein Lager der Hauptwelle. Weiterbildungsgemäß ist die Hauptwelle mittels der mindestens zwei Hauptlager in dem Gehäuse gelagert. Die Hauptlager sind axial, das heißt in Richtung einer Drehachse der Hauptwelle, voneinander beabstandet. Zwischen den beiden Lagern besteht also ein axialer Versatz. Ein Abstand zwischen den beiden Lagern in axialer Richtung ist größer als Null. Durch den axialen Versatz lassen sich auf die Hauptwelle einwirkende Biegemomente, das heißt Drehmomente, die in axialer Richtung bzw. orthogonal zu der Drehachse der Hauptwelle wirken, aufnehmen.

Ein Planetenträger des Getriebes wird in einer bevorzugten Weiterbildung mindestens teilweise von der Hauptwelle getragen. Der Planetenträger stützt sich also mindestens teilweise auf der Hauptwelle ab. Dies bedeutet, dass die Hauptwelle eine Gewichtskraft des Planetenträgers mindestens teilweise aufnimmt.

Vorzugsweise wird der Planetenträger vollständig von der Hauptwelle getragen. In dem Fall nimmt die Hauptwelle die Gewichtskraft des Planetenträgers vollständig auf. Eine separate Lagerung des Planetenträgers erübrigt sich dadurch. Durch die reduzierte Anzahl der Lagerstellen vereinfacht sich der Aufbau des Antriebsstrangs.

Bevorzugt ist die Antriebsanordnung mit einem oder mehreren Elastomeren weitergebildet. Ein Elastomer ist ein aus einem viskoelastischen Polymer bestehendes Federelement. Mittels der ein oder mehreren Elastomere ist das Gehäuse federnd in der Stützstruktur gelagert. Das Gehäuse stützt sich dabei über die ein oder mehreren Elastomere in der Stützstruktur ab. Die Nachgiebigkeit der Elastomere ermöglicht Relativbewegungen zwischen dem Gehäuse und der Stützstruktur. Die weiterbildungsgemäße Verwendung von Elastomeren ist von Vorteil, da Elastomere einfach aufgebaut und entsprechend kostengünstig und ausfallsicher sind.

In einer bevorzugten Weiterbildung sind Elastomere unterschiedlicher Steifigkeit vorgesehen. Weiterbildungsgemäß dienen ein erster Elastomer und ein zweiter Elastomer, wie oben beschrieben, der Lagerung des Gehäuses in der Stützstruktur. Der erste Elastomer und der zweite Elastomer zeichnen sich durch eine unterschiedliche Steifigkeit aus. Die Steifigkeit der Elastomere wird durch deren konstruktive Ausgestaltung und Materialhärte beeinflusst.

Weiterbildungsgemäß ist der erste Elastomer in einem radialen Zwischenraum zwischen dem Gehäuse und der Stützstruktur angeordnet. Der radiale Zwischenraum erstreckt sich in radialer Richtung, das heißt orthogonal zu der Drehachse der Hauptwelle. Dadurch wirken von dem ersten Elastomer aufgebrachte Federkräfte Relativbewegungen zwischen dem Gehäuse und der Stützstruktur in radialer Richtung entgegen.

Der zweite Elastomer ist in einem axialen Zwischenraum zwischen dem Gehäuse und der Stützstruktur angeordnet. Der axiale Zwischenraum erstreckt sich in axialer Richtung, das heißt parallel zu der Drehachse der Hauptwelle. Von dem ersten Elastomer aufgebrachte Federkräfte wirken entsprechend Relativbewegungen zwischen dem Gehäuse und der Stützstruktur in axialer Richtung entgegen.

Durch die weiterbildungsgemäß unterschiedliche Härte des ersten Elastomers und es zweiten Elastomers lässt sich die Antriebsanordnung besonders gut an Schwingungsformen anpassen, die in axialer und radialer Richtung unterschiedlich ausfallen.

Bevorzugt ist die Antriebsanordnung mit mindestens einem Bolzen und mindestens zwei Augen weitergebildet, die miteinander fluchten. Augen bezeichnen Durchgangs- oder Sackbohrungen, die zur Aufnahme eines Bolzens dien. Vorliegend weisen das Gehäuse und die Stützstruktur jeweils mindestens eines der Augen auf. Der Bolzen greift in die Augen ein. Ein Teil des Bolzens befindet sich also in jedem der mindestens zwei Augen. Die Augen bilden zusammen mit einem darin eingreifenden Bolzen eine der oben beschriebenen Lagerstellen.

Bevorzugte Weiterbildungen der Erfindung sind in den Figuren dargestellt. Übereinstimmende Bezugsziffern kennzeichnen dabei gleiche oder funktionsgleiche Merkmale. Im Einzelnen zeigt:
- Fig. 1: eine Antriebsanordnung einer Windkraftanlage;
- Fig. 2A: eine Anordnung von Lagerstellen;
- Fig. 2B: eine Anordnung von Lagerstellen mit alternativer Ausrichtung;
- Fig. 3: ein erstes Ausführungsbeispiel der Lagerstellen;
- Fig. 4: eine Explosionsdarstellung des ersten Ausführungsbeispiels;
- Fig. 5: ein zweites Ausführungsbeispiel der Lagerstellen;
- Fig. 6: ein drittes Ausführungsbeispiel der Lagerstellen;
- Fig. 7: ein viertes Ausführungsbeispiel der Lagerstellen;
- Fig. 8: ein fünftes Ausführungsbeispiel der Lagerstellen; und
- Fig. 9: ein sechstes Ausführungsbeispiel der Lagerstellen.

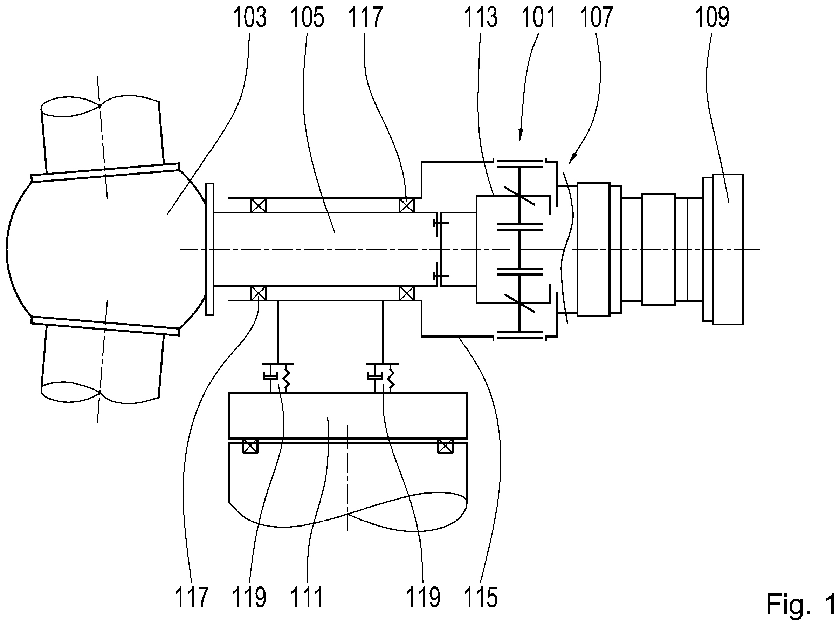

Die in Figur 1 dargestellte Antriebsanordnung 101 umfasst einen vom Wind angetriebenen Rotor 103, eine Hauptwelle 105, ein Getriebe 107, einen Generator 109 und einen Maschinenträger 111. Die Hauptwelle 105 ist als Eingangswelle des Getriebes 107 ausgebildet. Über die Hauptwelle 105 ist der Rotor 103 drehfest mit einem Planetenträger 113 einer ersten Planetenstufe des Getriebes 107 verbunden. Das Getriebe 107 wandelt ein von dem Rotor 103 auf die Hauptwelle 105 aufgebrachtes Antriebsmoment und leitet es an den Generator 109 weiter. Der Maschinenträger 111 ist Teil einer Gondel der Windkraftanlage.

Der gesamte dargestellte Antriebsstrang, bestehend aus der Hauptwelle 105, dem Getriebe 107 und dem Generator 109 ist in einer einzigen Gehäusestruktur 115 untergebracht. Entsprechend ist die Hauptwelle 105 mittels zweier Hauptlager 117 in der Gehäusestruktur 115 gelagert. Die beiden Hauptlager 117, die jeweils aus ein oder mehreren Lagereinheiten aufgebaut sein können, bilden die einzigen Lagerstellen der Hauptwelle 105.

Der Planetenträger 113 weist keine eigenen Lager auf. Er wird stattdessen von der Hauptwelle 105 getragen. Dazu ist er mit der Hauptwelle 105 verschraubt.

Die Gehäusestruktur 115 besteht aus mehreren Teilen, die starr miteinander verschraubt sind. Mittels Elastomeren 119 ist die Gehäusestruktur 115 federnd in dem Maschinenträger 111 gelagert.

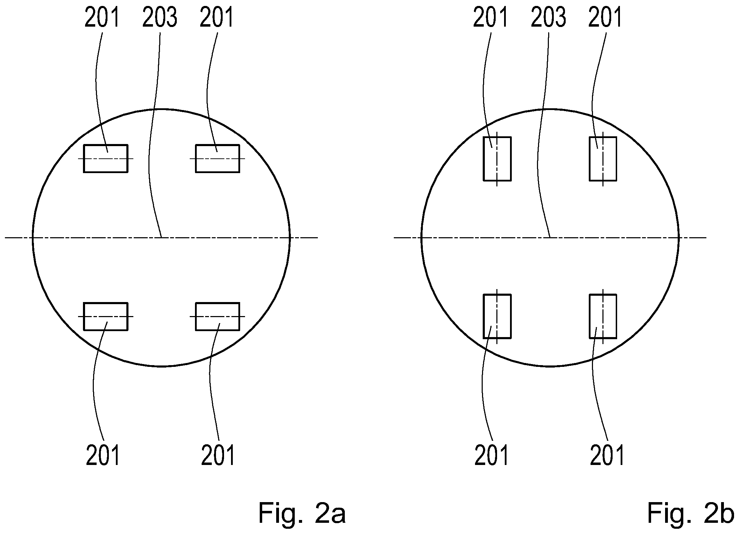

Jeder Elastomer 119 ist Teil einer in den Figuren 2A und 2B abgebildeten Lagerstelle 201. Die Lagerstellen 201 können, wie in Figur 2A dargestellt, so ausgerichtet sein, dass ihre Längsachse parallel zu einer Drehachse 203 der Hauptwelle 105 verläuft. Alternativ können sie, wie in Fig. 2B dargestellt, mit ihrer Längsachse orthogonal zu der Drehachse 203 ausgerichtet sein.

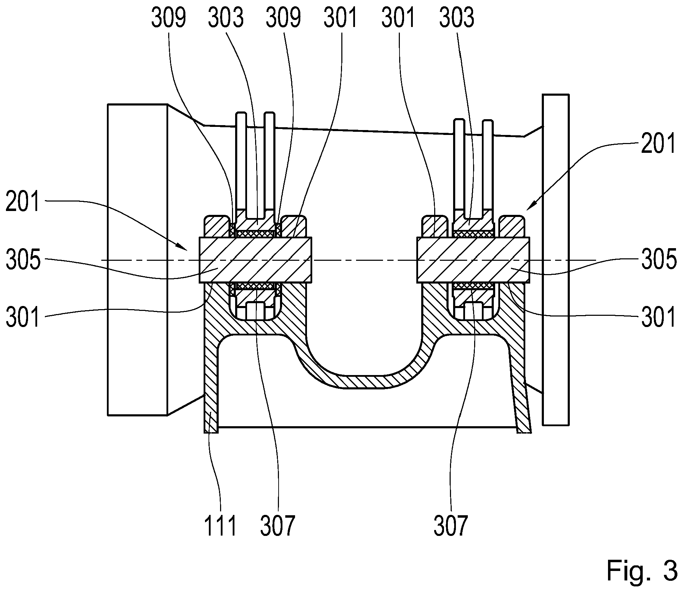

Die Antriebsanordnung 101 weist genau vier Lagerstellen 201 auf. Ausführungsbeispiele für den Aufbau der Lagerstellen 201 sind in den Figuren 3 bis 10 dargestellt.

Den Ausführungsbeispielen ist gemein, dass der Maschinenträger 111 pro Lagerstelle 201 zwei Augen 301 ausgebildet. Jeweils ein Auge 303 der Gehäusestruktur 115 fluchtet mit den beiden Augen 301. In ein Augenpaar 301 des Maschinenträgers 111 und ein zugehöriges Auge 303 der Gehäusestruktur 115 ist ein Bolzen 305 eingesteckt. Dieser fixiert das jeweilige Auge 303 der Gehäusestruktur 115 in den Augen 301 des Maschinenträgers 111.

Die vier Lagerstellen 201 weisen gemäß Figur 3 jeweils einen hohlzylindrischen Elastomer 307 auf. Dieser befindet sich in dem jeweiligen Auge 303 der Gehäusestruktur 111. Der hohlzylindrische Elastomer 307 dient dazu, Radialkräfte zu übertragen.

Zwei der vier Lagerstellen 201 weisen darüber hinaus jeweils zwei scheibenförmige Elastomere 309 auf. Diese befinden sich jeweils in einem axialen Zwischenraum zwischen dem Auge 303 der Gehäusestruktur 111 und einem Auge 301 des Maschinenträgers 111. Entsprechend dienen die Elastomere 309 der Aufnahme von Kräften in axialer Richtung.

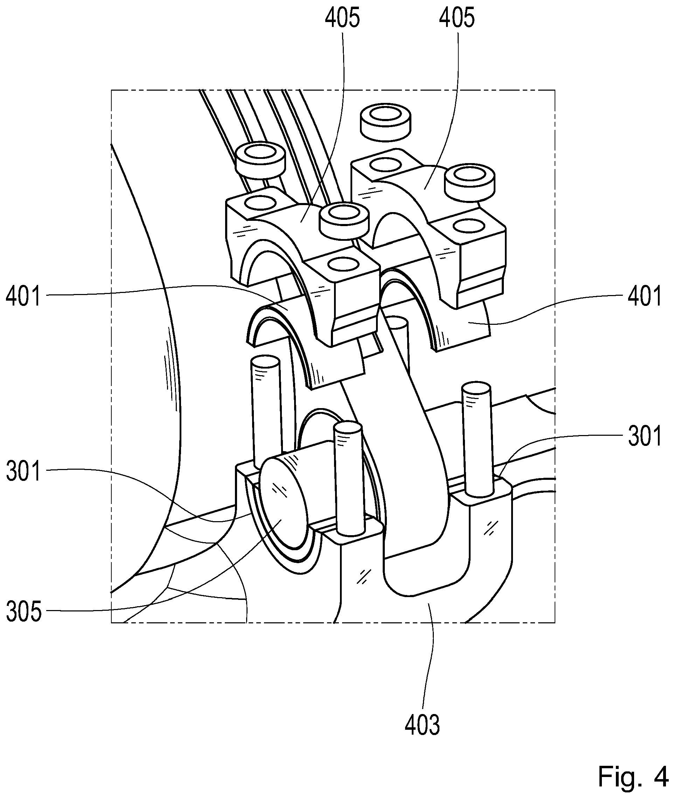

Bei den in den Figuren 4 bis 10 dargestellten Ausführungsbeispielen sind die Elastomere im Unterschied zu dem in Figur 3 dargestellten Ausführungsbeispiel nicht in den Augen 303 der Gehäusestruktur 115, sondern in den Augen 301 des Maschinenträgers 111 angeordnet. Hohlzylindrische Elastomere 401 dienen dabei der Kraftleitung in radialer Richtung.

Eine entsprechende Explosionsdarstellung zeigt Figur 4. Hier ist ersichtlich, dass sowohl die Augen 301 des Maschinenträgers 111 als auch die Elastomere 401 zweistückig ausgestaltet sind. So werden die Augen 301 durch einen einstückigen Grundkörper 403 und jeweils eine verschraubte Brücke 405 gebildet. Die Elastomere 401 bestehen jeweils aus zwei Halbschalen. Durch die zweistückige Ausführung der Augen 301 und der Elastomere 401 vereinfachen sich die Montage und der Austausch der Elastomere 401.

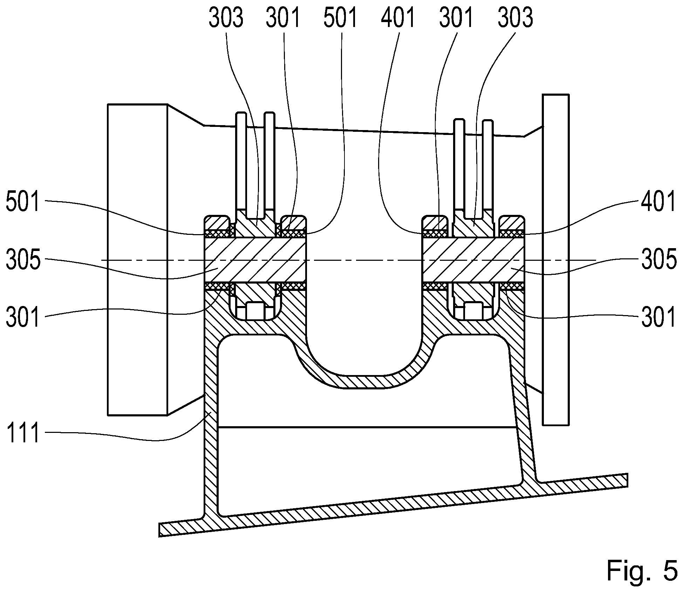

Figur 5 zeigt darüber hinaus Elastomere 501 mit einem hohlzylindrischen Abschnitt und einem scheibenförmigen Abschnitt. Der hohlzylindrische Abschnitt befindet sich radial zwischen dem jeweiligen Bolzen 305 und einem Auge 301 des Maschinenträgers 111. Dieser Abschnitt dient der Übertragung von Kräften in radialer Richtung. Zur Übertragung von Kräften in axialer Richtung erstreckt sich der scheibenförmige Abschnitt in einem axialen Zwischenraum zwischen dem jeweiligen Auge 303 der Gehäusestruktur 115 und einem Auge 301 des Maschinenträgers 111.

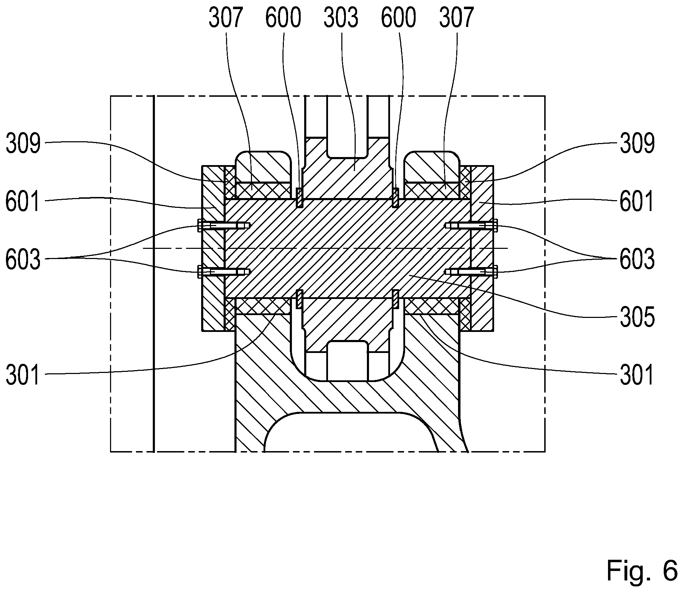

Gemäß den Figuren 6 bis 8 ist ein Auge 303 der Gehäusestruktur 111 mittels Sicherungsringen 600 auf einem Bolzen 305 fixiert. Die Elastomere bestehen auch hier aus einem hohlzylindrischen Abschnitt 307 und einem scheibenförmigen Abschnitt 309. Allerdings befindet sich der scheibenförmige Abschnitt 309 in einem Zwischenraum zwischen einem Auge 301 des Maschinenträgers 111 und einer Endkappe 601, die mittels jeweils zweier Schrauben 603 mit dem Bolzen 305 verschraubt ist.

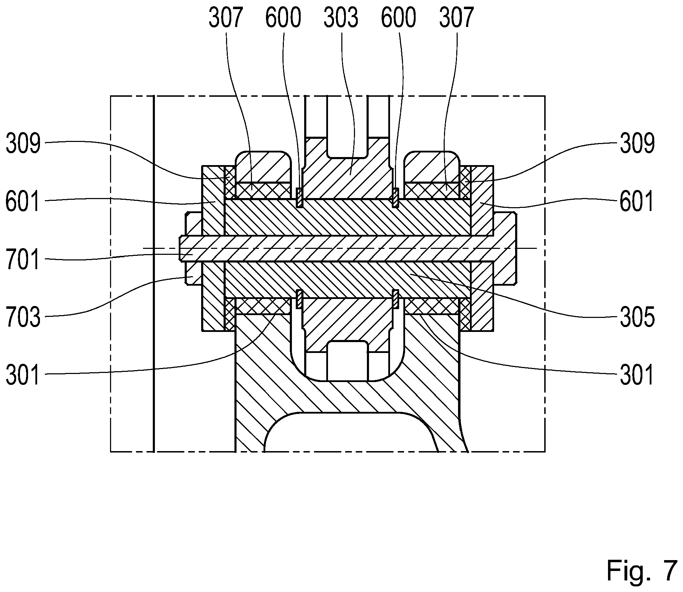

Figur 7 zeigt eine alternative Verschraubung der Endkappen 601. Hier führt eine einzige Schraube 701 durch den gesamten Bolzen 305 und die beiden Endkappen 601. Die Schraube 701 ist mittels einer Mutter 703 gegen die Endkappen 601 verspannt.

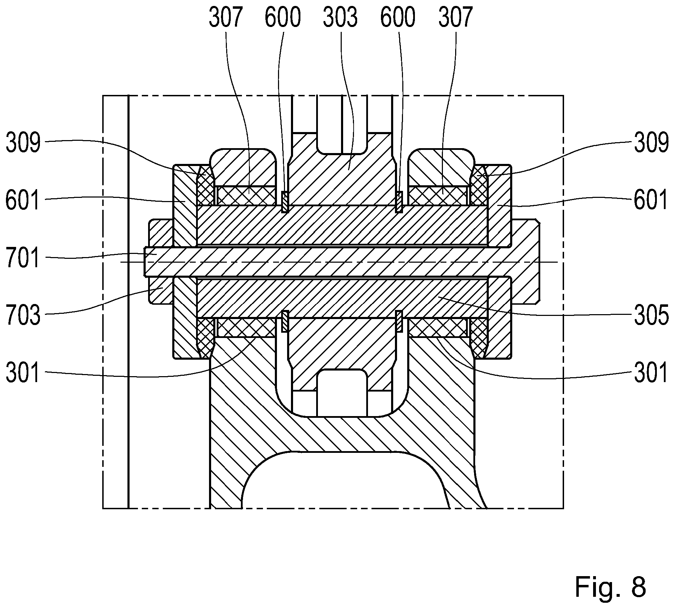

Gemäß Figur 8 sind die scheibenförmigen Abschnitte 309 konisch geformt. Die Endplatten 601 weisen eine entsprechende schalenförmige Vertiefung auf. Dies verhindert, dass sich die Elastomere bei einer axialen Belastung zu stark radial verformen.

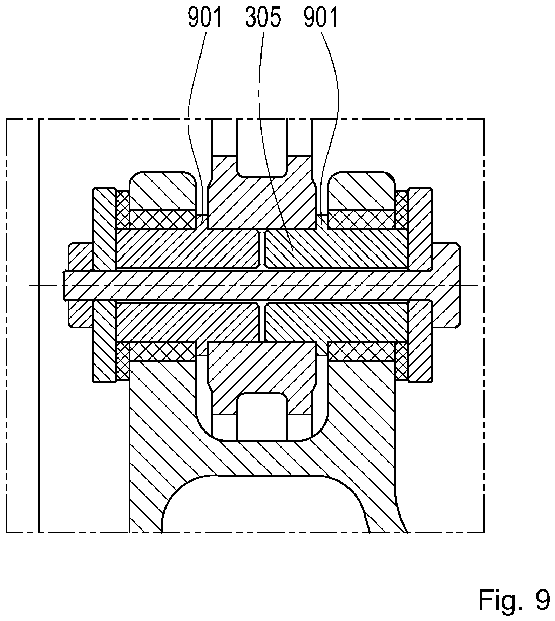

Figur 9 zeigt eine zweistückige Ausführung eines Bolzens 305. Der Bolzen 305 bildet hier Absätze 901 aus, die den Bolzen 305 anstelle von Sicherungsringen axial in dem Auge 303 fixieren.

### Bezugszeichen

- 101: Antriebsanorndung
- 103: Rotor
- 105: Hauptwelle
- 107: Getriebe
- 109: Generator
- 111: Maschinenträger
- 113: Planetenträger
- 115: Gehäusestruktur
- 117: Hauptlager
- 119: Elastomer
- 201: Lagerstelle
- 203: Drehachse
- 301: Auge
- 303: Auge
- 305: Bolzen
- 307: Elastomer
- 309: Elastomer
- 401: Elastomer
- 403: Grundkörper
- 405: Brücke
- 501: Elastomer
- 600: Sicherungsring
- 601: Endkappe
- 603: Schraube
- 701: Schraube
- 703: Mutter
- 901: Absatz

## Patentansprüche

1. Antriebsanordnung (101) für eine Windkraftanlage, mit einer Hauptwelle (105), einem Getriebe (107), einem Generator (109), einer Gehäusestruktur (115) und einer gondelfesten Stützstruktur (111); wobei
die Hauptwelle (105) und das Getriebe (107) in der Gehäusestruktur (115) untergebracht sind; wobei
die Hauptwelle (105) mittels zweier Hauptlager (117) vollständig in der Gehäusestruktur (115) gelagert ist; wobei
die Gehäusestruktur (115) mindestens teilweise federnd in der Stützstruktur (111) gelagert ist; **dadurch gekennzeichnet, dass**
der Generator (109) in der Gehäusestruktur (115) untergebracht ist.

2. Antriebsanorndung (101) nach Anspruch 1; **dadurch gekennzeichnet, dass**
die Gehäusestruktur (115) vollständig federnd in der Stützstruktur (111) gelagert ist.

3. Antriebsanorndung (101) nach einem der vorhergehenden Ansprüche; **gekennzeichnet durch**
mindestens zwei Hauptlager (117); wobei
die Hauptwelle (105) mittels der Hauptlager (117) in der Gehäusestruktur (115) gelagert ist; und wobei
die Hauptlager (117) axial voneinander beabstandet sind.

4. Antriebsanorndung (101) nach einem der vorhergehenden Ansprüche; **gekennzeichnet durch**
einen von der Hauptwelle (105) getragenen Planetenträger (113).

5. Antriebsanordnung (101) nach einem der vorhergehenden Ansprüche; **gekennzeichnet durch**
einen oder mehrere Elastomere (307, 309, 401, 501), mittels derer die Gehäusestruktur (115) federnd in der Stützstruktur (111) gelagert ist.

6. Antriebsanorndung (101) nach dem vorhergehenden Anspruch; **gekennzeichnet durch**
einen ersten Elastomer (307) und einen zweiten Elastomer (309) unterschiedlicher Härte; wobei
der erste Elastomer (307) in einem radialen Zwischenraum zwischen der Gehäusestruktur (115) und der Stützstruktur (111) angeordnet ist; und wobei
der zweite Elastomer (309) in einem axialen Zwischenraum zwischen der Gehäusestruktur (115) und der Stützstruktur (111) angeordnet ist.

7. Antriebsanordnung (101) nach einem der vorhergehenden Ansprüche; **gekennzeichnet durch**
mindestens einen Bolzen (305) und mindestens zwei miteinander fluchtende Augen (301, 303); wobei
die Gehäusestruktur (115) und die Stützstruktur (111) jeweils mindestens eins der Augen (301, 303) aufweisen; und wobei
der Bolzen (305) in die Augen (301, 303) eingreift.

## Claims

1. Drive arrangement (101) for a wind turbine, having a main shaft (105), having a transmission (107), having a generator (109), having a housing structure (115) and having a supporting structure (111) which is fixed with respect to a nacelle; wherein
the main shaft (105) and the transmission (107) are accommodated in the housing structure (115); wherein the main shaft (105) is mounted entirely in the housing structure (115) by means of two main bearings (117); wherein
the housing structure (115) is mounted at least partially resiliently in the supporting structure (111); **characterized in that**
the generator (109) is accommodated in the housing structure (115).

2. Drive arrangement (101) according to Claim 1;
**characterized in that**
the housing structure (115) is mounted fully resiliently in the supporting structure (111).

3. Drive arrangement (101) according to either of the preceding claims; **characterized by**
at least two main bearings (117); wherein
the main shaft (105) is mounted in the housing structure (115) by means of the main bearings (117); and wherein the main bearings (117) are spaced apart axially from one another.

4. Drive arrangement (101) according to one of the preceding claims; **characterized by**
a planet carrier (113) which is carried by the main shaft (105).

5. Drive arrangement (101) according to one of the preceding claims; **characterized by**
one or more elastomers (307, 309, 401, 501) by means of which the housing structure (115) is mounted resiliently in the supporting structure (111).

6. Drive arrangement (101) according to the preceding claim; **characterized by**
a first elastomer (307) and a second elastomer (309) of different hardnesses; wherein
the first elastomer (307) is arranged in a radial intermediate space between the housing structure (115) and the supporting structure (111); and wherein
the second elastomer (309) is arranged in an axial intermediate space between the housing structure (115) and the supporting structure (111).

7. Drive arrangement (101) according to one of the preceding claims; **characterized by**
at least one pin (305) and at least two mutually aligned lugs (301, 303); wherein
the housing structure (115) and the supporting structure (111) each have at least one of the lugs (301, 303); and wherein
the pin (305) engages into the lugs (301, 303).

## Revendications

1. Ensemble d'entraînement (101) pour une éolienne, avec un arbre principal (105), une transmission (107), un générateur (109), une structure de boîtier (115) et une structure de support (111) solidaire de la nacelle ; l'arbre principal (105) et la transmission (107) étant logés dans la structure de boîtier (115) ;
l'arbre principal (105) étant monté en totalité dans la structure de boîtier (115) au moyen de deux paliers principaux (117) ;
la structure de boîtier (115) étant montée au moins en partie sur ressorts dans la structure de support (111) ; **caractérisé en ce que**
le générateur (109) est logé dans la structure de boîtier (115).

2. Ensemble d'entraînement (101) selon la revendication 1 ; **caractérisé en ce que**
la structure de boîtier (115) est montée en totalité sur ressorts dans la structure de support (111).

3. Ensemble d'entraînement (101) selon l'une des revendications précédentes ; **caractérisé par**
au moins deux paliers principaux (117) ;
l'arbre principal (105) étant monté dans la structure de boîtier (115) au moyen des paliers principaux (117) ; et les paliers principaux (117) étant espacés l'un de l'autre axialement.

4. Ensemble d'entraînement (101) selon l'une des revendications précédentes ; **caractérisé par**
une cage de transmission planétaire (113) supportée par l'arbre principal (105).

5. Ensemble d'entraînement (101) selon l'une des revendications précédentes ; **caractérisé par**
un ou plusieurs élastomères (307, 309, 401, 501), au moyen desquels la structure de boîtier (115) est montée sur ressorts dans la structure de support (111).

6. Ensemble d'entraînement (101) selon la revendication précédente ; **caractérisé par**
un premier élastomère (307) et un deuxième élastomère (309) de dureté différente ;
le premier élastomère (307) étant disposé dans un espace intermédiaire radial entre la structure de boîtier (115) et la structure de support (111) ; et
le deuxième élastomère (309) étant disposé dans un espace intermédiaire axial entre la structure de boîtier (115) et la structure de support (111).

7. Ensemble d'entraînement (101) selon l'une des revendications précédentes ; **caractérisé par**
au moins un boulon (305) et au moins deux œillets (301, 303) alignés l'un avec l'autre ;
la structure de boîtier (115) et la structure de support (111) comportant chacune au moins un des œillets (301, 303) ; et
le boulon (305) venant en prise avec les œillets (301, 303).
